# EUROPEAN PATENT APPLICATION

(11) **EP 1 560 009 A1**
(43) Date of publication of application: **03.08.2005**
(21) Application number: 03703372.7
(22) Date of filing: 25.02.2003
(51) Int. Cl.: G01K 11/06, G01K 11/12, G09F 3/02, C09K 3/00, C09J 7/02, B65D 25/20

(54) **TEMPERATURE INDICATING DISPLAY DEVICE**

(30) Priority: 24.10.2002 JP 2002309457
(71) Applicant: CHROMIC Co., Ltd., Tokyo 101-0041 (JP); Ishii, Tadahiro, Kawagoe-shi, Saitama 350-1108 (JP)
(72) Inventor: Ishii, Tadahiro, Kawagoe-shi, Saitama 350-1108 (JP); Tsunoda, Katsunori, Shinjuku-ku, Tokyo 162-0803 (JP); Kaimai, Mitsuru, c/o CHROMIC Co., Ltd., ,Shinagawa-ku, Tokyo 141-0031 (JP); ASAKAWA,Yohko, c/o CHROMIC Co., Ltd., ,Shinagawa-ku, Tokyo 141-0031 (JP)
(74) Representative: Cresswell, Thomas Anthony
(86) International application number: PCT/JP2003/002048
(87) International publication number: WO 2004/038353

(57) **Abstract**

A temperature indicating display device capable of displaying a thermo-history above a predetermined temperature reliably and irreversibly. Moreover, it is possible to provide a laminated body having a temperature detecting layer and an information recording film layer. When the temperature indicating display device is exposed to a predetermined temperature, an irreversible shift is caused and the temperature history can be displayed. Moreover, the temperature indicating display device includes an information recording film layer containing information, an information record holding layer for holding the information, and a temperature detection agent layer composed of a material whose state is shifted according to a temperature and is **characterized in that** when a predetermined temperature is detected, the material of the temperature detection agent layer is changed so as to change the display state of information recorded in the information recording layer. A laminated body using the temperature indicating display device, a vessel containing the device, and a labeled temperature indicating display device are also disclosed. Furthermore, the present invention provides a side-type temperature indicating display device in which a conventional information display member can be used as it is.

## Description

### Technical Field

The present invention relates to a temperature indicating display device capable of displaying a temperature history by causing an irreversible shift upon exposing to a predetermined temperature. More specifically, the invention relates to such a temperature indicating display device that contains an information recording film layer having information recorded therein, an information record holding layer for holding the information, and a temperature detecting agent layer containing a substance changing its state depending on temperature, characterized in that the substance in the temperature detecting agent layer is shifted in state upon exposing a predetermined temperature, so as to change the display state of the information recorded in the information recording film layer, and also relates to a laminated body thereof, a container having the device installed therein, and a temperature indicating display label obtained by forming the device into a label form.

### Background Art

According to the progress of the freezing technique and the refrigeration technique, various kinds of foods can be maintained in safety for a long period of time. Furthermore, according to the progress of the low temperature transportation technique, such as the cold chain system, various kinds of cryopreservation foods are available as commercial products.

In recent years, on the other hand, the safety of foods comes to a major issue. It is said that ten thousand or more people suffer food intoxication per one year, and the number of the people is increasing from year to year although the preservation technique of foods has been improved.

As the reason therefore, it is noted that persons with weak resistance to bacteria are increased in number, but the reason also resides in the handling of foods.

It is noted in general that a healthy person is not affected if the number of bacteria is 10⁵ or less per 1 g of a food, and various methods have been practiced for suppressing the growth of bacteria upon preservation of foods. For example, in order to suppress the growth of bacteria upon preservation of foods, such means are provided that a chemical, such as an antiseptic, is added, or the salt content is increased. However, these means influence the taste and the quality of foods, and thus it is apparent that preservation of food at a low temperature is excellent. Furthermore, there is such a tendency that the use of additives is avoided as far as possible owing to the health-consciousness in recent years, and thus the preservation at a low temperature receives increasing attention.

However, upon preservation of foods at a low temperature, bacteria would grow exponentially and thus the safety standard is often not satisfied if the temperature is not sufficiently controlled during production, transportation and distribution of foods. For example, it is said that E. coli grows exponentially in each 2 hours if the temperature rises from 3°C to 10°C. Furthermore, upon rising of the temperature, water contained in the foods is expanded to form voids within the foods, and nutrients of the foods are exuded along with water through the voids to the surface of the foods due to a capillary effect, which results to supply the nutrients for the bacterial growth. Moreover, when the foods are re-chilled, bacteria on the surface of the foods are infiltrated into the foods with the extruded water to expand the bacterial contamination into the interior of the foods. Though the growth rate of bacteria is suppressed by re-chilling, the growth rate may greatly increase compared to the ordinary case due to the counteraction when the temperature rises after chilling.

Thus, fluctuations in temperature are considerably large issues for foods preserved at a low temperature from the standpoint of hygienic supervision.

Although there is no large difficulty to maintain a temperature of 3°C or lower within food factories during production of foods, it is not so easy to maintain a temperature of 3°C or lower on transportation after shipment from the factories and on distribution in retail stores, such as supermarkets and convenience stores.

It is the current situation that a consumer cannot know the temperature history of foods before consuming the foods by the consumer. There have been various ideas for indicating the temperature history of foods to a consumer, and as one example thereof, a temperature history display material has been developed. For example, JP-A-10-287863 discloses an invention relating to a temperature history display material that is irreversibly colored through reaction of plural substances at a predetermined temperature, and the temperature history display material has a coloring agent layer, a temperature detecting agent layer and a developer layer. In the present invention, the coloring agent layer and the developer layer are delimited with the temperature detecting agent layer, and the temperature detecting agent layer melts at a predetermined temperature to color by contacting the coloring agent layer and the developer layer. Since the coloring reaction occurs irreversibly, the coloring of the temperature history display material shows whether or not the material suffers the predetermined temperature.

The system uses an irreversible reaction and is effective, but requires the coloring agent and the developer, the complicated structure of the temperature history display material and high cost, which makes the system practically difficult to be used.

Other conventional temperature history display materials also have a temperature-sensitive coloring material or coloring agent and thus the materials are not practically used.

Therefore, an object of the invention is to provide a display material with a simple structure that can reliably and irreversibly display a temperature history of a predetermined temperature or higher. The present invention also provides a laminated body having a temperature detecting agent layer and an information recording film layer.

### Disclosure of the Invention

As a result of earnest investigations made by the inventors in view of the aforementioned problems associated with the conventional techniques, it has been found that information such as characters and barcodes recorded on an information recording film layer can be irreversibly destroyed or made into an unreadable or readable state by setting a physical state of a substance in a temperature detecting agent layer being shifted at a predetermined temperature, and which led to the present invention of a simple device capable of irreversibly displaying the temperature history.

It has been found, for example, that disposing the temperature detecting agent layer containing a substance of which physical state is shifted at a predetermined temperature adjacent to the information recording film layer enables to melt or diffuse the substance constituting the information recording film layer in accordance with the shift of physical state of the substance in the temperature detecting agent layer, whereby the information recorded in the information recording film layer can be irreversibly destroyed, or the information recording layer can be irreversibly made opaque or transparent in accordance with the shift of physical state of the substance in the temperature detecting agent layer.

Accordingly, the present invention relates to a temperature indicating display device containing an information recording film layer having information recorded therein, and a temperature detecting agent layer containing a substance of which the state shift dependently on temperature, wherein the state of substance in the temperature detecting agent layer is shifted upon undergoing a predetermined temperature, so as to change a display of the information recorded in the information recording film layer, and also relates to a container having the device installed therein.

The invention also relates to a laminated body for temperature indicating display containing a temperature detecting agent layer, an information recording film layer and an information record holding layer, or to a laminated body for temperature indicating display containing a temperature detecting agent layer, a diffusion layer, an information recording film layer and an information record holding layer.

Furthermore, the invention also relates to a temperature indicating display label containing a substrate, a separator containing a temperature detecting agent layer containing a substance of which the state shifts dependently on temperature, and an information record holding layer containing an information recording layer recorded therein.

More specifically, the invention relates to the following items.
(A) It relates to a temperature indicating display device comprising an information recording film layer having information recorded therein, and a temperature detecting agent layer containing a substance of which the state shifts dependently on temperature, wherein the state of substance in the temperature detecting agent layer shifts upon undergoing a predetermined temperature, so as to change a display of the information recorded in the information recording film layer.
(B) It relates to the temperature indicating display device as described in the item (A), wherein the substance of which the state shifts dependently on temperature contained in the temperature detecting agent layer is a substance that melts at a predetermined temperature or higher.
(C) It relates to the temperature indicating display device as described in the item (A) or (B), wherein a substance forming a recording film of the information recording film layer is a substance that melts or disperses into a melted state of which the state shifts dependently on temperature contained in the temperature detecting agent layer.
(D) It relates to the temperature indicating display device as described in one of the items (A) to (C), wherein the substance of which the state shifts dependently on temperature in the temperature detecting agent layer comprises at least one heat melting agent selected from the group consisting of a paraffin, a higher fatty acid, a higher fatty acid ester and a higher alcohol.
(E) It relates to the temperature indicating display device as described in the item (A), wherein the substance of which the state shifts dependently on temperature contained in the temperature detecting agent layer comprises two or more substances forming a heterogeneous phase, which becomes a homogeneous phase to change a light transmittance at a predetermined temperature or higher.
(F) It relates to the temperature indicating display device as described in one of the items (A) to (E), wherein the temperature detecting agent layer is adjacent to the information recording film layer.
(G) It relates to the temperature indicating display device as described in one of the items (A) to (D), wherein the temperature indicating display device further comprises a diffusion layer, and preferably the diffusion layer is disposed between the information recording film layer and the temperature detecting agent layer. It preferably relates to the temperature indicating display device as described in one of the items (A) to (D), wherein the diffusion layer comprises of a porous substance, such as paper and a porous resin.
(H) It relates to the temperature indicating display device as described in one of the items (A) to (G), wherein the substance of which the state shifts dependently on temperature contained in the temperature detecting agent layer is placed in a separator having a concave shape on a central part thereof.
(I) It relates to the temperature indicating display device as described in one of the items (A) to (H), wherein the temperature indicating display device is in a form of a sticker.
(J) It relates to the temperature indicating display device as described in one of the items (A) to (I), wherein the temperature indicating display device further comprises an adhesive layer and is capable of being attached.
(K) It relates to a temperature indicating device comprising a temperature detecting agent placing part having a substance of which the state shifts dependently on temperature therein, and a diffusion layer is disposed to touch the placing part.
(L) It relates to the temperature indicating device as described in the item (K), wherein the substance of which the state shifts dependently on temperature placed in the temperature detecting agent placing part is a substance that melts at a predetermined temperature or higher, and a substance forming a recording film of an information recording film layer comprises a substance that melts or disperses into a melted sate of which the state shifts dependently on temperature placed in the temperature detecting agent placing part.
(M) It relates to a temperature indicating display device comprising the temperature indicating device as described in the item (K) or (L), wherein at least a part of the diffusion layer touches a part of an information recording film layer of an information display member having an information recording film layer, and the device having a structure that upon melting the temperature detecting agent, the temperature detecting agent is capable of flowing or permeating into the information recording film layer through the diffusion layer.
(N) It relates to the temperature indicating display device as described in the item (M), wherein the temperature indicating device as described in the item (K) or (L) and the information display member having the information recording film layer are totally covered with a transparent protective sheet.
(O) It relates to a temperature detecting agent being capable of forming the temperature detecting agent layer comprising a substance of which the state shifts dependently on temperature in the temperature indicating display device as described in one of the items (A) to (N) .
(P) It relates to a container comprising the temperature indicating display device as described in one of the items (A) to (J), (M) and (N), and preferably the container is a food container, a packing container or a transporting container.
(Q) It relates to a temperature indicating display label comprising a substrate, a separator containing a temperature detecting agent layer containing a substance of which the state shifts dependently on temperature, and an information record holding layer containing an information recording layer having information recorded therein. It preferably relates to a label wherein the information record holding layer and the separator comprises a transparent material and the temperature detecting agent layer and the information recording film layer recorded in the information record holding layer are adjacent to each other, and more preferably it relates to the label which further comprises a porous plate capable of forming a diffusion layer.
(R) It relates to a laminated body of the temperature indicating display device comprising a temperature detecting agent layer containing a substance of which the state shifts dependently on temperature, an information recording film layer and an information record holding layer, and preferably relates to the laminated body further comprising a diffusion layer between the information recording film layer and the temperature detecting agent layer.

In recent years, a label having printed information such as a barcode is attached to various kinds of consumer products, such as foods, and is used for management of distribution and products. The inventors have noted the label, and have developed a label capable of displaying a temperature history.

That is, it has been found that a practical temperature indicating display device can be provided at low cost in a simple measure by the combination of an information recording film having the information recorded by printing, and the temperature detecting agent. A major characteristic feature of the invention resides in the combination of the information recording film and the temperature detecting agent, whereby a practical temperature indicating display device capable of reliably and irreversibly displaying temperature indication to a predetermined temperature is provided at low cost without using a coloring agent or a temperature-sensitive coloring material having been conventionally used.

The term "temperature indication" referred in the invention means the presence or absence of a temperature history to a predetermined temperature.

### BRIEF DESCRIPTION OF THE DRAWINGS

Fig. 1 schematically shows a "dissolution type" embodiment of the invention.
Fig. 2 schematically shows a "infiltration type" embodiment of the invention.
Fig. 3 schematically shows a "solid dispersion type" embodiment of the invention.
Fig. 4 schematically shows a "dressing type" embodiment of the invention.
Fig. 5 shows an example of a side type temperature indicating display device of the invention.
Fig. 6 shows a cross sectional view on the plane A-A' in Fig. 5.
Fig. 7 shows a cross sectional view showing a temperature detecting agent placing part having a barrier part of a temperature indicating device of the invention.
Fig. 8 shows another example of a side type temperature indicating display device of the invention.
Fig. 9 shows a cross sectional view on the plane A-A' in Fig. 8.
Fig. 10 shows results of analysis of 65% oleyl alcohol with a differential scanning calorimeter (DSC). In Fig. 10, the abscissa indicates the temperature (°C), and the ordinate indicates the differential calorie (mcal/sec).
Fig. 11 shows results of analysis of 85% oleyl alcohol with a differential scanning calorimeter (DSC). In Fig. 11, the abscissa indicates the temperature (°C), and the ordinate indicates the differential calorie (mcal/sec).
Fig. 12 shows results of analysis of 95% oleyl alcohol with a differential scanning calorimeter (DSC). In Fig. 12, the abscissa indicates the temperature (°C), and the ordinate indicates the differential calorie (mcal/sec).
Fig. 13 shows results of analysis of 65% oleyl alcohol and ethyl cellulose (thickening agent) with a differential scanning calorimeter (DSC). In Fig. 13, the abscissa indicates the temperature (°C), and the ordinate indicates the differential calorie (mcal/sec).
Fig. 14 shows results of analysis of 97% pentadecane with a differential scanning calorimeter (DSC). In Fig. 14, the abscissa indicates the temperature (°C), and the ordinate indicates the differential calorie (mcal/sec).
Fig. 15 shows results of analysis of oleic acid with a differential scanning calorimeter (DSC). In Fig. 15, the abscissa indicates the temperature (°C), and the ordinate indicates the differential calorie (mcal/sec).
Fig. 16 shows results of a response test to a temperature at 10°C, 14°C, 18°C and 23°C in the case where 65% oleyl alcohol is used as the temperature detecting agent. In Fig. 16, the abscissa indicates the temperature (°C), and the ordinate indicates the average response time (sec).

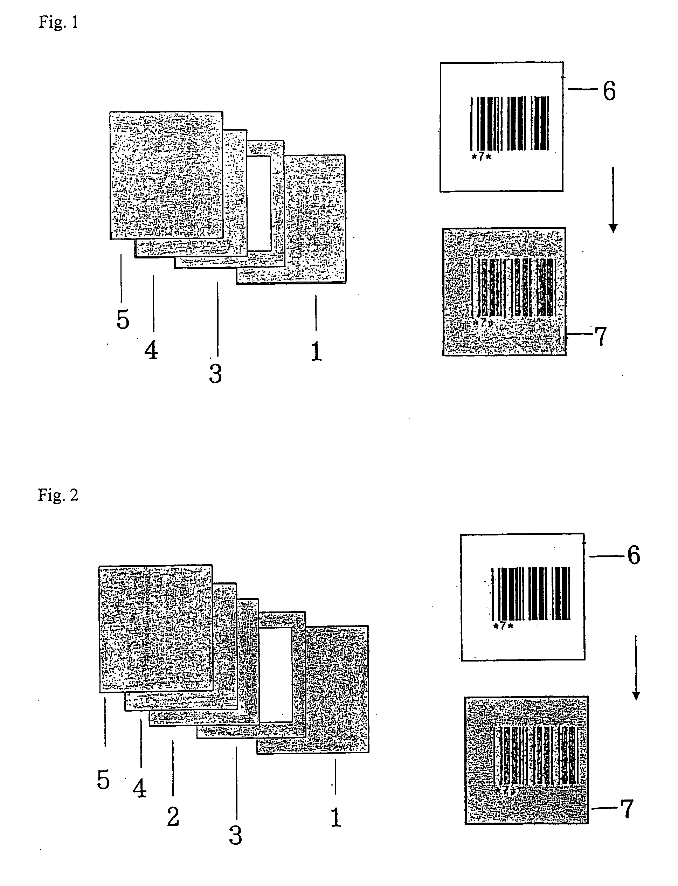

The symbols in Figs. 1 to 9 mean the following.
1 denotes a substrate.
2 denotes a diffusion layer.
3 denotes a separator containing a temperature detecting agent layer.
4 denotes an information record holding layer having an information recording film layer.
5 denotes a laminate seal.
6 denotes a state of an information recording film maintained at a predetermined temperature or lower.
7 denotes a state of an information recording film exposed to a predetermined temperature or higher.
8 denotes a state of a temperature detecting agent layer maintained at a predetermined temperature or lower.
9 denotes a state of a temperature detecting agent layer having exposed to a predetermined temperature or higher.
10 and 20 each denotes an example of the temperature indicating display device of the invention.
11 and 21 each denotes a part where a temperature detecting agent placing part is formed.
12 and 22 each denotes a temperature detecting agent placing part.
13 and 23 each denotes a diffusion layer.
14 and 24 each denotes an information display member having an information recording film layer.
15 and 25 each denotes a transparent protective sheet.
16 and 26 each denotes a container.
141 and 241 each denotes an information recording film layer.
142 and 242 each denotes an information record holding layer.
143 and 243 each denotes a substrate layer of an information display member.

### Best Mode for Carrying Out the Invention

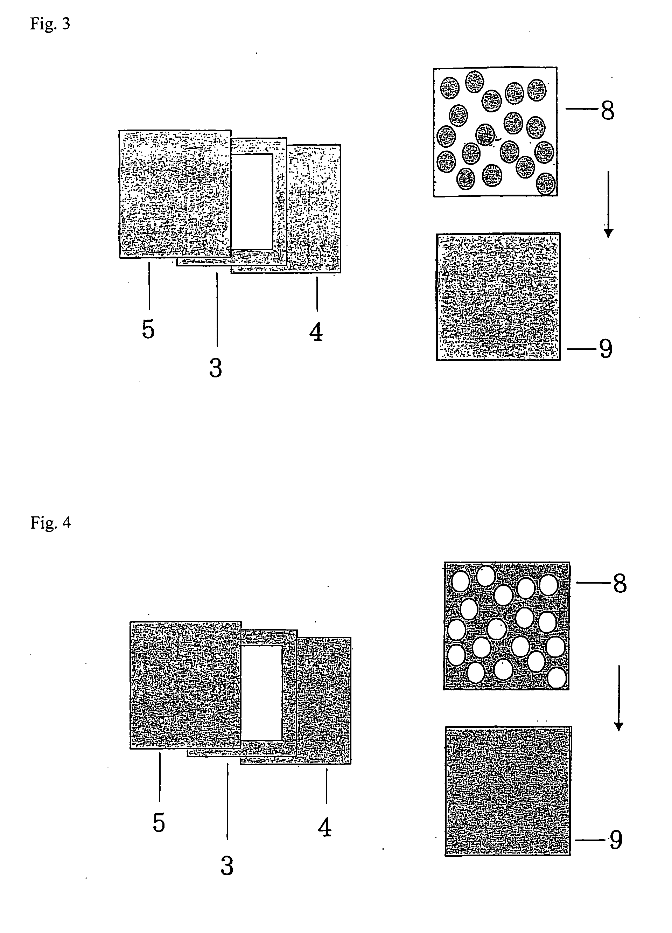

A major characteristic feature of the present invention resides in the combination of the information recording film and the temperature detecting agent, and specific embodiments of the invention based on the combination can be roughly classified into the following four types. However, the invention is not limited to the embodiments, and any embodiment that includes the combination of the information recording film and the temperature detecting agent is encompassed by the present invention.
1. An ink or the like of the information recording film is dissolved by melting of the temperature detecting agent, whereby information recorded by printing or the like is destroyed to disable reading. Hereinafter, the embodiment is referred to as a dissolution type. See Fig. 1.
2. The temperature detecting agent infiltrates into the diffusion layer upon melting or softening of the temperature detecting agent, so as to dissolve or disperse an ink or the like of the information recording film which is in contact with the diffusion layer, whereby the information recorded by printing or the like is destroyed to disable reading. Hereinafter, the embodiment is referred to as an infiltration type. See Fig. 2.
3. A temperature detecting agent layer containing a substance which becomes opaque upon forming a homogeneous phase is used wherein the substance is dispersed heterogeneously in a transparent or translucent liquid or gelled product. The physical state of the dispersed substance is shifted at a predetermined temperature to opaque by forming a homogeneous phase, whereby the information recorded in the information recording film disposed thereunder is made unreadable. Hereinafter, the embodiment is referred to as a solid dispersion type. See Fig. 3.
4. A temperature detecting agent layer containing a substance fixed to a solid or gelled products as minute bubbles or particles is used wherein the solid or gelled products are not dissolved by the substance. The solid or gelled products become fluent at a predetermined temperature and are separated from the substance to make the opaque temperature detecting agent layer transparent, whereby the information recorded in the information recording film, which has not been readable, is made readable. Hereinafter, the embodiment is referred to as a dressing type. See Fig. 4.

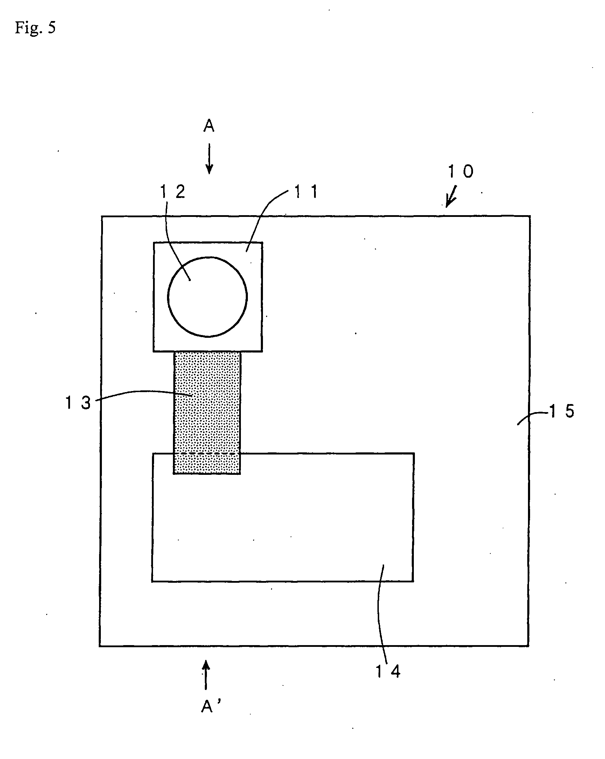

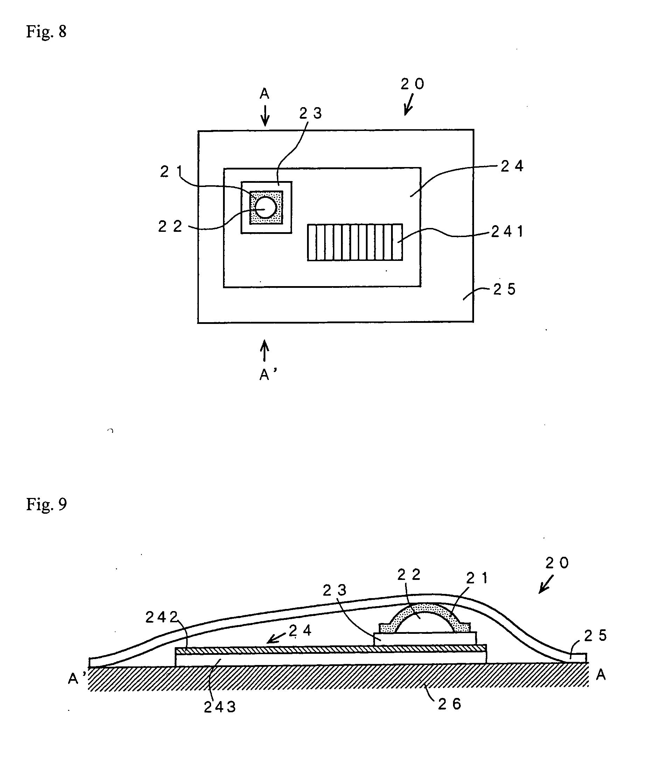

A side type can be exemplified as an application of the dissolution type or the infiltration type. See Figs. 5 and 8.

The four embodiments of the invention are shown in Figs. 1 to 4, respectively. Fig. 1 schematically shows the dissolution type embodiment of the present invention, which contains a separator 3 placed on a substrate 1 wherein a temperature detecting agent layer is set on the central part of the separator 3, and an information record holding layer 4 having an information recording film layer having information recorded on the lower surface thereof wherein the temperature detecting agent layer and the information recording film layer are disposed to be closely adjacent to each other. This assembly is protected by covering with a laminate seal 5. The substrate 1 has an adhesive layer on the back surface thereof, whereby the device can be fixed to a container or the like.

Upon exposing the device to a predetermined temperature, the temperature detecting agent in the temperature detecting agent layer melts, whereby a printing ink or the like in the information recording film layer, which is disposed to be closely adjacent to the temperature detecting agent layer melts to destroy the recorded contents. The recorded contents once destroyed cannot be restored, and thus the accrual of the destruction of the recorded contents indicate the temperature history that the device undergoes the predetermined temperature or higher.

Fig. 2 schematically shows the infiltration type embodiment of the invention, which contains a separator 3 placed on a substrate 1 wherein a temperature detecting agent layer is set on the central part of the separator 3, a diffusion layer 2 placed on the separator 3 and an information record holding layer 4 placed on the diffusion layer 2. In this type, the information record holding layer has an information recording film layer having information recorded on the lower surface thereof, and the diffusion layer is disposed to be closely adjacent to both the temperature detecting agent layer and the information recording film layer. This assembly is protected by covering with a laminate seal 5. The substrate 1 has an adhesive layer on the back surface thereof, whereby the device can be fixed to a container or the like.

Upon exposing the device to a predetermined temperature, the temperature detecting agent in the temperature detecting agent layer melts or softened to be infiltrated into the diffusion layer, which is disposed to be closely adjacent to the temperature detecting agent layer, and in a state where the temperature detecting agent is sufficiently infiltrated, the temperature detecting agent reaches the information recording film layer through the diffusion layer and melts a printing ink or the like in the information recording film layer to destroy the recorded contents. The recorded contents once destroyed cannot be restored, and thus the accrual of the destruction of the recorded contents indicate the temperature history that the device undergoes the predetermined temperature or higher.

Fig. 3 schematically shows the solid dispersion type embodiment of the invention, which contains an information record holding layer 4 having an information recording film layer having information recorded on the upper surface thereof, and a separator 3 placed on the layer 4 wherein a temperature detecting agent layer is set on the central part of the separator 3, and the assembly is protected by covering with a laminate seal 5. The information record holding layer 4 has an adhesive layer on the back surface thereof, whereby the device can be fixed to a container or the like.

Upon exposing the device to a predetermined temperature or higher, the temperature detecting agent layer having been in a heterogeneous phase in the temperature detecting agent layer is increased in flowability to be in a homogeneous phase. At the time when the temperature detecting agent layer is in a heterogeneous phase, the temperature detecting agent layer can maintain transparency since the solid is localized, but the solid melts or softens upon exposing to the predetermined temperature or higher to form a homogeneous phase, so as to become totally opaque. The information recorded on the information record holding layer 4 by printing or the like is unreadable when the temperature detecting agent layer becomes opaque. The temperature detecting agent layer once being in a heterogeneous phase cannot be restored to a transparent homogeneous phase, and thus the impossibility of reading the recorded contents indicate the temperature history that the device undergoes the predetermined temperature or higher.

Fig. 4 schematically shows the dressing type embodiment of the invention, which contains an information record holding layer 4 having an information recording film layer having information recorded on the upper surface thereof, and a separator 3 having a temperature detecting agent layer on the central part thereof placed on the layer 4, and this assembly is protected by covering with a laminate seal 5. The information record holding layer 4 has an adhesive layer on the back surface thereof, whereby the device can be fixed to a container or the like.

Upon exposing the device to a predetermined temperature or higher, the minute bubbles or particles uniformly dispersed in and fixed to the temperature detecting agent layer are aggregated through increase in fluidity of the surrounding substance to form a separated heterogeneous system, preferably a two phase system, and as a result, the temperature detecting agent layer having been opaque with the minute particles or bubbles becomes transparent, whereby the information recorded on the information record holding layer 4 by printing or the like becomes readable through the laminate seal 5. The temperature detecting agent layer once being aggregated to form the phase cannot be restored to an opaque state, and thus the possibility of reading the recorded contents recorded on the information record holding layer 4 indicate the temperature history that the device undergoes the predetermined temperature or higher.

As an application of the dissolution type and the infiltration type, examples of a side type temperature indicating display device are shown in Figs. 5 and 8.

Fig. 5 shows an example of the side type, in which the part for recording information, such as a barcode, on the surface of the information display member is large, and the part capable of being made in contact with the diffusion layer is small. Fig. 8 shows an example, in which the area having information recorded therein is small, and substantially the entire of a forming part which forms the temperature detecting agent placing part can be placed on the information display member.

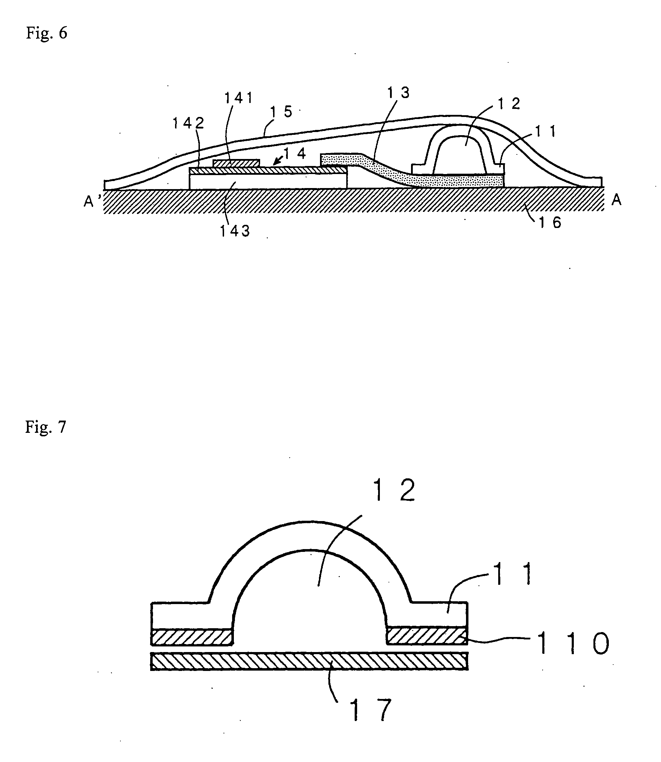

The first example of the side type temperature indicating display device of the present invention is shown in Fig. 5. The temperature indicating display device 10 has a temperature detecting agent placing part 12, a forming part 11 for forming the same, a diffusion layer 13 which touches the temperature detecting agent, an information display member 14 which touches the other end of the diffusion layer 13, and a protective sheet 15 for protecting the above components. The information display member 14 may be those having been used, such as a barcode label, and those attached to a product, a container of a product, or a transporting container for transporting a product. One end of the diffusion layer 13 is made to touch a part of the surface of the information display member 14 where information, such as a barcode, is not printed, and the forming part 11 for the temperature detecting agent placing part 12 is provided on the other end of the diffusion layer 13. The above components are covered with the transparent protective sheet 15 having an adhesive layer inside for fixing them. Fig. 6 shows a cross sectional view on the plane A-A' of the temperature indicating display device 10 shown in Fig. 5.

Upon exposing the temperature indicating display device shown in Fig. 5 to a predetermined temperature or higher, the temperature detecting agent in the temperature detecting agent placing part 12 melts to be eluted or infiltrated into the diffusion layer 13, which is disposed to be closely adjacent to the temperature detecting agent placing part 12, and when the temperature detecting agent is sufficiently eluted or infiltrated, the temperature detecting agent reaches the information recording film layer 141 through the diffusion layer 13 and melts a printing ink or the like in the information recording film layer to destroy the recorded contents. The recorded contents once destroyed cannot be restored, and thus the destruction of the recorded contents indicate the temperature history that the device undergoes the predetermined temperature or higher.

Fig. 7 shows a cross sectional view of the forming part 11 having the temperature detecting agent placing part 12 formed in the side type temperature indicating display device 10 of the present invention upon storing. This type could be a blister pack in which a hollow part for housing the temperature detecting agent is provided on the central part. An adhesive layer 110 is provided on an outer periphery of the bottom part, which is sealed with a barrier part 17. A liquid or solid temperature detecting agent is placed in the hollow part and sealed with the barrier part 17, whereby the temperature detecting agent can be stored at room temperature. Upon using the temperature detecting agent, the temperature detecting agent are solidified by chilling at a low temperature, then the barrier part 17 is removed to make closely into contact with the diffusion layer 13.

As another example of the side type temperature indicating display device of the present invention, a temperature indicating display device 20 shown in Fig. 8 can be exemplified. The device has the same principal as the temperature indicating display device shown in Fig. 5 but is different therefrom in such a point that substantially the entire part of the diffusion layer 23 and the temperature detecting agent placing part 22 can be provided on the information display member 24.

The side type temperature indicating display device of the present invention has such a characteristic feature that an information display member that has been conventionally used, such as a barcode label, can be used as it is, and also has such a significant feature that the temperature detecting agent placing part and the diffusion layer can be independently produced, distributed and stored. Therefore, the temperature indicating display device of the present invention forms an independent temperature indicating device containing a temperature detecting agent placing part having a temperature detecting agent placed therein, and a diffusion layer. Furthermore, the temperature detecting agent placing part having a temperature detecting agent placed therein, and the diffusion layer can be independently produced, distributed and stored, and thus production, distribution, storage and transfer of them as a part of the temperature indicating device are also encompassed in the scope of the invention.

The temperature detecting agent in the temperature detecting agent layer in the "dissolution type" or "infiltration type" embodiment or the side type embodiment of the invention is preferably one or more kinds of substances that becomes a liquid or a sol by melting or softening at a predetermined temperature or higher and can melt or diffuse a substance recording information, such as printing ink. Specific examples of the preferred temperature detecting agent include a thermal melting agent, such as paraffin, a higher fatty acid, a higher fatty acid ester and a higher alcohol. The temperature detecting agent may have a melting point around the target predetermined temperature and can melt or diffuse a substance recording information, such as printing ink. In the case of a product that should not be exposed to a relatively high temperature, such as an industrial product, a substance having a high melting point may be employed, and in the case of a product that should not be exposed to room temperature or higher, such as a medicinal product, a substance having a melting point around room temperature may be employed. In the case of a product that should not be exposed to a relatively low temperature, such as foods, a substance having a relatively low melting point may be employed. The melting point of the substance can be selected from a range of about from -50 to 100°C for an industrial product, can be selected from a range of about from 10 to 80°C for a medicinal product and a product stored at ordinary temperature, and can be selected from a range of about from -30 to 50°C for foods.

The temperature detecting agent may contain only one kind of substance or may be a mixture of two or more kinds of substances. An additive, such as a lubricating agent, a thickening agent and a coloring agent, may be added thereto depending on necessity.

In the case where no suitable substance having a melting point around the predetermined temperature can be found, the melting point can be set at the predetermined temperature by mixing two or more substances for utilizing the melting point depression function.

Specific examples of the temperature detecting agent include, but not limited to, a paraffin compound having from 10 to 30 carbon atoms, preferably from 12 to 20 carbon atoms, more preferably from 12 to 18 carbon atoms; a substituted or unsubstituted higher fatty acid having from 10 to 30 carbon atoms, preferably 12 to 20 carbon atoms, more preferably from 12 to 18 carbon atoms, such as lauric acid, stearic acid and 2-oxymyristic acid; an ester of the higher fatty acid, such as ethyl myristate, stearyl laurate and dioctyl phthalate; a substituted or unsubstituted higher alcohol having from 6 to 30 carbon atoms, preferably from 6 to 20 carbon atoms, and more preferably from 10 to 18 carbon atoms, such as n-cetyl alcohol, oleyl alcohol, n-octyl alcohol and tetradecanol; a ketone, such as methyl hexyl ketone and benzophenone; a higher ether, such as diphenyl ether and distearyl ether; a higher fatty acid amide, such as oleic acid amide, stearic acid amide, lauric acid N-octylamide and caproic acid anilide; an aromatic hydrocarbon compound, such as isopropylbenzene, dodecylbenzene, biphenyl, trimethylbiphenyl, diphenylethane, dibenzyltoluene and propylnaphthalene; and various organic solvents, such as dimethylsulfoxide (DMSO).

The temperature detecting agent component is preferably a paraffin compound, a higher fatty acid, a higher fatty acid ester, a higher alcohol and the like under consideration of cost.

The "solid dispersion type" or "dressing type" embodiment of the invention utilizes a shift of the state of substances based on fluidity of plural, preferably two kinds of substances. In the "solid dispersion type", the temperature detecting agent layer becomes opaque due to the shift of the state upon exposing to a predetermined temperature or higher, and in the "dressing type", the temperature detecting agent layer becomes transparent due to the shift of the state upon exposing to a predetermined temperature or higher. For example, a salad dressing contains an aqueous phase and an oily phase and becomes opaque by mixing well since the phases are mixed as minute liquid droplets, but is separated into two phases through phase separation by aggregating the aqueous phase and the oily phase, respectively, after allowing to stand for a certain period of time. That is, the system becomes transparent because each of the phases is transparent. The "dressing type" embodiment of the invention has a characteristic feature that the opaque state is fixed under a low temperature. The temperature detecting agent layer is in a state maintaining opacity by fixing at a low temperature, and upon exposing to a predetermined temperature or higher, they are increased in fluidity to release the fixed state, whereby for example, the aqueous phase and the oily phase are separated to each other to produce transparency. As a result of development of transparency of the temperature detecting agent layer, the information recorded under the layer becomes readable by optical means or the like.

The substance in the "dressing type" embodiment of the invention may be such a combination of substances that are not mutually dissolved and thus form an opaque state where the substances are mixed as minute bubbles or particles at a low temperature, which becomes transparent at a predetermined temperature or higher through phase separation or mutual dissolution of the substances. Examples thereof include a combination of water and an oil mixed as minute particles by ultrasonic agitation, which is fixed at a low temperature, and a combination of a liquid, such as water or glycerin, with a gas, such as air, minutely bubbled therein, which is fixed. Upon exposing the combination to a predetermined temperature of more, one or both of the substances are increased in fluidity to aggregate the minute bubbles or particles, so as to form a transparent phase. Examples of the combination of substances include but not limited to water and an oil, and water and glycol, such as glycerin. The proportion of the components is not limited and is preferably about from 1/1 to 1/100. An additive, such as a lubricating agent, a thickening agent and a coloring agent, may be added thereto if necessary.

As the solid substance in the "solid dispersion type" embodiment of the present invention may be one or more kinds of substance that is melted at a predetermined temperature. The substance is dispersed as minute powder in a substance as a transparent carrier at a temperature equal to or lower than the melting point thereof to form the temperature detecting agent layer. Upon exposing the temperature detecting agent layer to a predetermined temperature or higher, the solid substance is melted and aggregated through liquefaction to form an opaque phase, whereby the temperature detecting agent layer becomes opaque. The solid substance may be such a substance that is melted at a predetermined temperature to form an opaque phase after melting, to which a coloring agent, a scattering substance or the like may be added to ensure the opacity after melting. Preferred examples of the solid substance include a fatty acid, such as oleic acid, an ester thereof, and paraffin. In the case where a desired melting point could not be provided by using one substance at the predetermined temperature, two or more kinds of substances may be mixed. The substance as a transparent carrier may be a transparent material having fluidity, and examples thereof include water and an alcohol, such as methanol, ethanol and glycerin. The proportion of the solid substance is not limited, and is preferably about from 1/0.1 to 1/100 with respect to the liquid component. An additive, such as a lubricating agent, a thickening agent and a coloring agent, may be added thereto if necessary.

More preferred embodiments of the invention include the "dissolution type" and "infiltration type" embodiments. These embodiments directly act on a recording substance, such as a printing ink, having information recorded thereby, and thus a temperature indicating display device having a simpler structure can be provided. In the "solid dispersion type" and "dressing type" embodiments of the present invention, the transparency can be changed independently from the characteristics of the recording substance having information recorded thereby, and thus is preferred for the case where a peculiar recording substance is used. However, the structure thereof becomes complicated due to the multiphase system thereof in comparison to the "dissolution type" and "infiltration type" embodiment and the side type embodiment.

The information recorded in the information recording layer is not limited and is preferably information that can be optically read. Examples thereof include a barcode for a product, and a sign with warning for temperature indication.

The temperature detecting agent layer of the present invention can be prepared in a form of ply of sheet or sheet having a necessary size surrounded by frame in order to improve its workability. In the specification, the temperature detecting agent layer having such a frame is referred to as a "separator". The frame may have a hollow center or a concave at the center thereof. In the case of the frame having concave, the temperature detecting agent is set into the concave. The frame is preferably transparent, but it is not necessarily transparent depending on embodiments.

In the "dissolution type" embodiment of the present invention, the temperature detecting agent layer is provided adjacent to the information recording film layer, and thus the temperature detecting agent layer, the information recording film layer and the information record holding layer are consecutively disposed. In the "infiltration type" embodiment of the present invention, the diffusion layer is provided between the information recording film layer and the temperature detecting agent layer, and thus the temperature detecting agent layer, the diffusion layer, the information recording film layer and the information record holding layer are consecutively arranged. The diffusion layer may be such a layer that the temperature detecting agent exposed to a predetermined temperature or higher can be infiltrated or passed therein, so as to act on the information recording film layer, and a porous substance, such as paper, and a resin having minute pores formed therein may be used. The layers are arranged in the aforementioned manners, whereby a temperature history can be displayed.

In the "solid dispersion type" and "dressing type" embodiment of the invention, the temperature detecting agent layer is disposed on the information recording film layer, and the temperature detecting agent layer, the information recording film layer and the information record holding layer are consecutively arranged. The layers are arranged in the aforementioned manners, whereby a temperature history can be displayed.

Accordingly, the invention provides a laminated body having the aforementioned structures.

The temperature indicating display device of the present invention can be formed into a label. The temperature indicating display device of the invention is attached to a substrate for forming a label through adhesion or lamination to form a label. While the temperature indicating display device of the present invention may be fixed as it is to various containers, it is preferably fixed after forming into a label.

The fixing means to a container is not particularly limited, and various means may be used, such as adhesion, lamination, insertion into a slot provided on a container, and attachment with a sucking disk. The temperature indicating display device of the invention may be fixed with a sticker covering the entire thereof.

Furthermore, a printed recording film, such as a barcode printed on a container, may be used as the information recording film layer in the present invention. That is, the temperature detecting agent layer of the present invention can be fixed on a printed part of a preexisting container after removing a protective member on the printed part if necessary, whereby the temperature indicating display device of the present invention can be produced. In the embodiment, such as the aforementioned example of the side type embodiment, the temperature detecting agent layer of the temperature indicating display device of the present invention can be produced and used as an independent product. Therefore, the present invention also relates to such a temperature detecting agent composition containing a substance of which the state shifts dependently on temperature that is capable of forming the temperature detecting agent layer of the temperature indicating display device of the invention. The temperature detecting agent composition of the invention may contain only the aforementioned substance changing its state depending on temperature, and an additive, such as solvent, a thickening agent, a lubricating agent and a coloring agent, may be added thereto.

It is also encompassed in the scope of the present invention that the temperature detecting agent composition is placed in a forming part having a temperature detecting agent placing part (for example, a case for a temperature detecting agent), and is sealed with a barrier part, such as a metallic thin film, to produce a product. A diffusion layer member may be attached to the temperature detecting agent member to provide a temperature indicating member according to the present invention.

Examples of the container in the invention include a container for a product that requires indication of a temperature history thereof, such as a packing container and a transporting container or the like.

Specific examples thereof include a container for beverage, such as milk, tea and coffee, a container for various foods, such as lunchbox, sweets and sandwich, and a container for a medicinal product and a cosmetic, and further include an industrial product that should not be exposed to a high temperature, such as a semiconductor material and an aerosol product, and a container therefor, and a product that should be transported at a low temperature and a container therefor. The temperature indicating display device of the invention may be attached not only to the containers but also to a packing for the container and a transporting container for the product.

The temperature indicating display device of the invention may be attached upon shipping from a factory, upon transporting, or upon selling at a store. For example, in the case of a product to be transported at a low temperature, the temperature indicating display device of the present invention may be attached thereto upon starting of the transportation, and may be attached to a container upon selling, for example, in the case of sweets.

Therefore, the temperature indicating display device of the invention is attached to cryopreservation foods and industrial products or containers therefor, whereby a consumer can view the temperature history of the products through the state of the temperature indicating display device upon purchasing or consuming the cryopreservation products. In addition to the visual observation of the temperature history of the product, the appropriateness of the temperature history can be mechanically determined by a distributor or a manufacturer upon reading a barcode, since the barcode cannot be read with a barcode reader due to destruction of the barcode.

Furthermore, a conventional information display member, such as a barcode label, can be applied to the side type temperature indicating display device of the present invention, so as to produce the temperature indicating display device of the present invention with simple materials. The temperature indicating device of the present invention containing a temperature detecting agent housing member and a diffusion layer can be produced, distributed and stored independently from the information display member, such as a barcode label. The temperature indicating device of the present invention can be present independently from the information display member, and thus the conventional information display member, such as a barcode label, can be used as it is. The temperature indicating device of the invention can be produced, distributed and stored at ordinary temperature owing to the barrier part provided, and thus it can be conveniently handled without any special apparatus.

The contents disclosed in the specification of Japanese Patent Application No. 2002-309457 are incorporated herein by reference.

### Example

The invention will be more specifically described with reference to the following examples, but the invention is not construed as being limited to the examples.

### Example 1

Oleic acid was used as a temperature detecting agent. Oleic acid was heated to 30 to 40°C, and it was then quenched with liquid nitrogen and cut into a thin film form to obtain a temperature indicating agent. Oleic acid in a liquid state can be quenched into a thin film form to obtain a temperature indicating agent in a thin film form. The temperature indicating agent had a critical temperature (predetermined temperature) of about 10°C.

The resulting temperature detecting agent having a thickness of about 0.5 mm was placed in a frame having a concave to obtain a separator. A layer having information recorded therein containing a transparent plastic film (information record holding layer) having a barcode (information recording film layer) printed thereon was disposed on the separator in such a manner that the information recording film layer was closely in contact with the temperature detecting agent layer.

The entire of the temperature indicating display device thus obtained was sealed with a laminating material (polypropylene).

When the display device was allowed to stand at room temperature (about 20°C) for 20 minutes, the information of the barcode could not be visually recognized.

### Example 2

A temperature detecting agent layer was produced in the same manner as in Example 1.

The resulting temperature detecting agent having a thickness of about 0.5 mm was placed in a frame having a concave to obtain a separator, on which paper having a thickness of about 0.5 mm was placed to form a diffusion layer, and a layer having information recorded therein containing a transparent plastic film (information record holding layer) having a barcode (information recording film layer) printed thereon was disposed on the diffusion layer in such a manner that the information recording film layer was closely in contact with the diffusion layer.

The entire of the temperature indicating display device thus obtained was sealed with a laminating material (polypropylene).

When the display device was allowed to stand at room temperature (about 20°C) for 20 minutes, the information of the barcode could not be visually recognized.

### Example 3

10 g of oleic acid was heated to 30 to 40°C, with which 10 mL of water was mixed, followed by sufficiently agitating, and the mixture was further agitated with ultrasonic wave. The mixed solution was quenched with liquid nitrogen to produce minute solids of oleic acid in water. The mixture was gradually heated to obtain a solid dispersion liquid having only water melted, to which a small amount of alkaline substance was added to obtain a temperature detecting agent. The temperature detecting agent was sealed with a transparent film to obtain a temperature detecting agent layer having a thickness of about 0.5 mm. The temperature detecting agent had a critical temperature (predetermined temperature) of about 10°C. The resulting temperature detecting agent layer having a thickness of about 0.5 mm was placed in a frame to obtain a separator. A layer having information recorded therein containing a transparent plastic film (information record holding layer) having a barcode (information recording film layer) printed thereon was placed under the separator to obtain a temperature indicating display device.

In the display device, the barcode could be viewed at a temperature of 10°C or lower, but when it was allowed to stand at room temperature (about 20°C) for 20 minutes, the information of the barcode could not be visually recognized.

### Example 4

10 mL of glycerin was agitated in the presence of air with an ultrasonic agitator. The solution having minute bubbles generated was quenched with liquid nitrogen to fix the minute bubbles. The resulting temperature detecting agent was sealed with a transparent film to obtain a temperature detecting agent layer having a thickness of about 0.5 mm. The temperature detecting agent had a critical temperature (predetermined temperature) of about 18°C.

The resulting temperature detecting agent having a thickness of about 0.5 mm was placed in a frame to obtain a separator, and a layer having information recorded therein containing a transparent plastic film (information record holding layer) having a barcode (information recording film layer) printed thereon was placed under the separator to obtain a temperature indicating display device.

In the display device, the barcode could not be viewed at a temperature of 15°C or lower, but when the device is placed at room temperature (about 20°C) for 30 minutes, the information of the barcode could be visually recognized.

It was confirmed from the aforementioned experimental results that in the case where the temperature indicating display device of the invention was allowed to stand at a critical temperature (predetermined temperature), the information recorded in the information recording film layer was destroyed, or the information recorded in the information recording film layer could not be visually read or could be visually read.

### Example 5

The side type temperature indicating display device shown in Fig. 5 was produced. Oleyl alcohol (Wako Pure Chemical Industries, Ltd., purity: 65%) was used as the temperature detecting agent. A blister pack produced by Kanae Co., Ltd. was used as a case for the temperature detecting agent, and aluminum was used as a seal part. A package having an interior content of 0.3 mL was used. Waxed paper, Kichinto-san, was used as the diffusion paper.

Conventional heat-sensitive paper was used as the information display member. An OHP sheet was used as the transparent protective sheet.

### Example 6

The side type temperature indicating display device shown in Fig. 8 was produced in the same manner as in Example 5 except that the using amount of oleyl alcohol was decreased.

### Example 7 Differential scanning calorimeter (DSC) analysis of temperature-sensitive materials

The temperature-sensitive materials were analyzed with a differential scanning calorimeter (DSC) under the measuring conditions below.

### [Measuring Conditions]

| | | |
|---|---|---|
| Apparatus | | DSC-3200S |
| Container | | aluminum bowl with 6.5 in diameter |
| Standard sample | | alumina (40 mg) |
| Temperature increasing rate | | 3°C per minute |
| Sample | | |
| (1) | 65% oleyl alcohol | 38.2 mg |
| (2) | 85% oleyl alcohol | 54.6 mg |
| (3) | 95% oleyl alcohol | 39.8 mg |
| (4) | 65% oleyl alcohol and | |
| | ethyl cellulose (thickening agent) | 37.2 mg |
| (5) | 97% pentadecane | 37.8 mg |
| (6) | oleic acid | 38.5 mg |

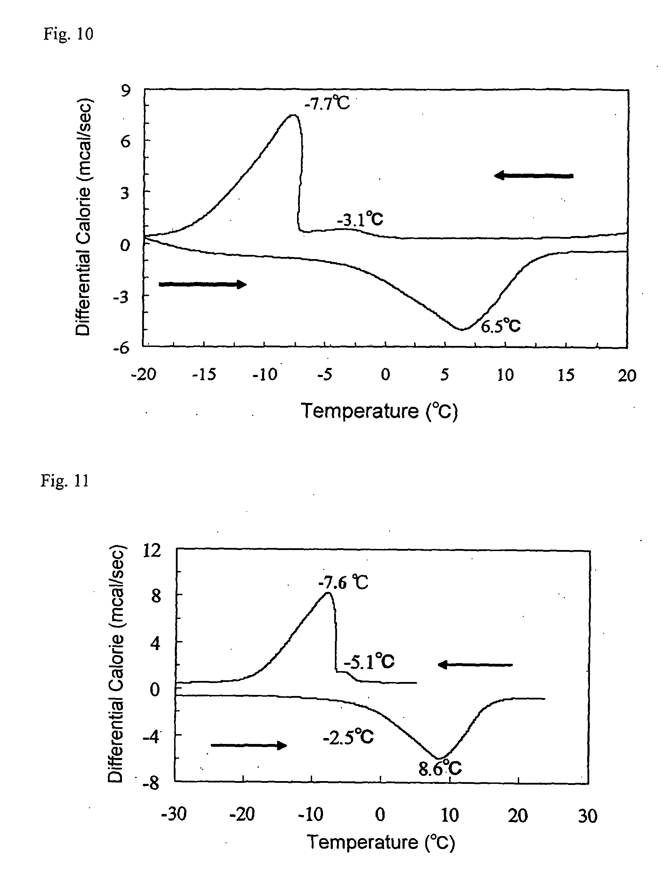

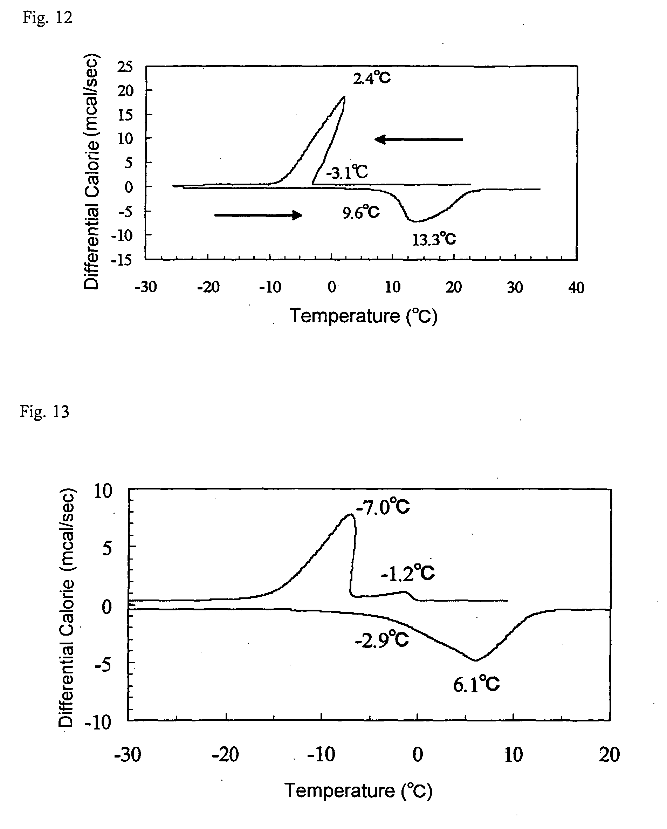

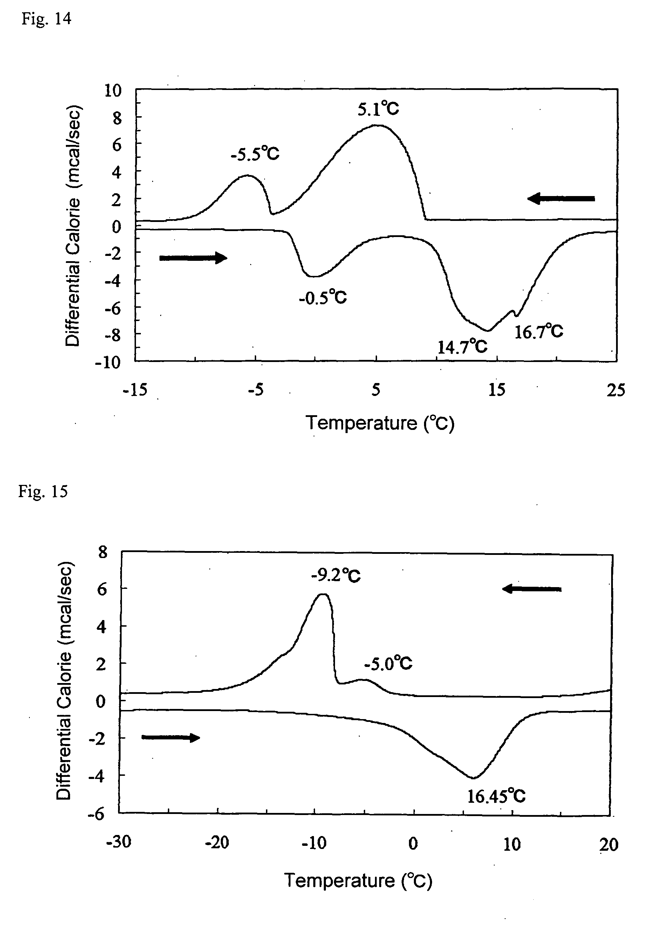

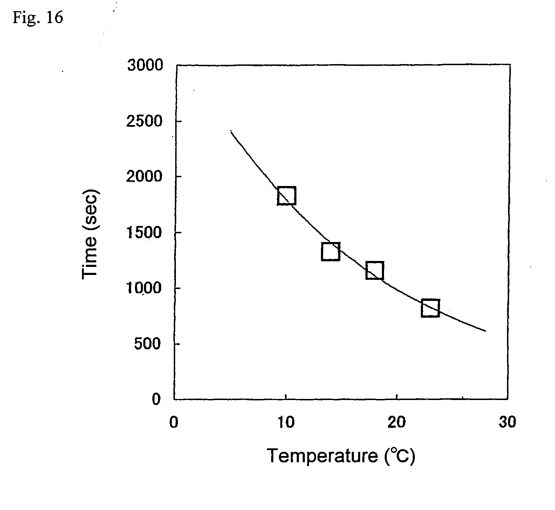

The results are shown in Fig. 10 (sample (1)), Fig. 11 (sample (2)), Fig. 12 (sample (3)), Fig. 13 (sample (4)), Fig. 14 (sample (5)) and Fig. 15 (sample (6)), respectively. In the figures, the abscissa indicates the temperature (°C), and the ordinate indicates the differential calorie (mcal/sec). The negative value means endotherm.

The intended purpose of the temperature-sensitive material is mainly for temperature management of perishable foods, and those having less harmful properties, such as dangerousness and toxicity, are selected and analyzed. It was found that pentadecane and oleic acid were suitable in view of temperature characteristics, but under consideration of affinity with heat-sensitive paper, alcohol reagents were preferred to use mainly in view of difficulty of selection of a heat-sensitive agent.

### Example 8 Test of diffusion layer materials

The materials for the diffusion layer were investigated. Various kinds of paper as the materials for the diffusion layer were investigated for optical micrographs thereof to investigate actually the diffusion capabilities of the paper. As a result, it was found that a structure like nonwoven fabric, such as waxed paper and grease absorbing paper, was suitable.

### Example 9 Response characteristics test for temperature

With respect to infiltration of the temperature-sensitive material in the temperature indicating display device shown in Fig. 5, the response characteristics of the temperature indicating tag at 10°C, 14°C, 18°C and 23°C were investigated with the temperature indicating device using 65% oleyl alcohol as a temperature-sensitive material and waxed paper as a diffusion layer. Upon reading the barcode with a barcode reader at those temperatures, the time (second) when the reading was disabled was designated as a response time.

The results obtained are shown in Fig. 16. In Fig. 16, the abscissa indicates the temperature (°C), and the ordinate indicates the average response time (sec).

### Industrial Applicability

The temperature indicating display device of the invention can reliably and irreversibly display as to whether or not the device suffers a predetermined temperature limitation with a simple structure. For example, it can be visually determined easily as to whether or not cryopreservation foods are stored and distributed at a predetermined temperature or lower, and it can be mechanically determined since the recorded information is destroyed.

The temperature indicating display device of the invention can be widely applied to various kinds of industrial products that should not be exposed to a predetermined temperature or higher, and deterioration of the product due to a temperature history on preservation and distribution can be reliably avoided by visual inspection or mechanical reading. With respect to foods, the extent of putrefaction of the foods due to exposure to a high temperature can be recognized with the temperature indicating display device of the invention.

## Claims

1. A temperature indicating display device comprising an information recording film layer having information recorded therein and a temperature detecting agent layer containing a substance of which a state shifts dependently on temperature, wherein the state of substance in the temperature detecting agent layer shifts upon undergoing a predetermined temperature, so as to change a display of the information recorded in the information recording film layer.

2. The temperature indicating display device as claimed in claim 1, wherein the substance of which the state shifts dependently on temperature contained in the temperature detecting agent layer is a substance that melts at a predetermined temperature or higher.

3. The temperature indicating display device as claimed in claim 2, wherein a substance forming a recording film of the information recording film layer is a substance that melts or disperses into the melted state of which the state shifts dependently on temperature contained in the temperature detecting agent layer.

4. The temperature indicating display device as claimed in claims 1 to 3, wherein the substance of which the state shifts dependently on temperature in the temperature detecting agent layer comprises at least one heat melting agent selected from the group consisting of a paraffin, a higher fatty acid, a higher fatty acid ester and a higher alcohol.

5. The temperature indicating display device as claimed in claim 1, wherein the substance of which the state shifts dependently on temperature contained in the temperature detecting agent layer comprises two or more substances forming a heterogeneous phase, which becomes a homogeneous phase to change a light transmittance at a predetermined temperature or higher.

6. The temperature indicating display device as claimed in claims 1 to 5, wherein the temperature detecting agent layer is adjacent to the information recording film layer.

7. The temperature indicating display device as claimed in claims 1 to 4, wherein the temperature indicating display device further comprises a diffusion layer.

8. The temperature indicating display device as claimed in claim 7, wherein the diffusion layer comprises a porous substance.

9. The temperature indicating display device as claimed in claim 7 or 8, wherein the diffusion layer comprises a paper.

10. The temperature indicating display device as claimed in claim 7 to 9, wherein the diffusion layer is disposed between the information recording film layer and the temperature detecting agent layer.

11. The temperature indicating display device as claimed in claims 1 to 10, wherein the substance of which the state shifts dependently on temperature contained in the temperature detecting agent layer is placed in a separator having a concave shape on a central part thereof.

12. The temperature indicating display device as claimed in claims 1 to 11, wherein the temperature indicating display device is in a form of a sticker.

13. The temperature indicating display device as claimed in claims 1 to 12, wherein the temperature indicating display device further comprises an adhesive layer and is capable of being attached.

14. A temperature indicating device comprising a temperature detecting agent placing part having a substance of which the state shifts dependently on temperature therein, and a diffusion layer is disposed to touch the placing part.

15. The temperature indicating device as claimed in claim 14, wherein the substance of which the state shifts dependently on temperature set in the temperature detecting agent placing part is a substance that melts at a predetermined temperature or higher, and a substance forming a recording film of an information recording film layer comprises a substance that melts or disperses into a melted state of which the state shifts dependently on temperature placed in the temperature detecting agent placing part.

16. The temperature indication devise as claimed in claim 14 or 15, wherein the temperature detecting agent placing part has a barrier layer.

17. A temperature indicating display device comprising a structure wherein at least a part of the diffusion layer of the temperature indicating display as claimed in claim 14 or 15 touches a part of an information recording film layer of an information display member having an information recording film layer and the temperature detecting agent is capable of flowing or permeating into the information recording film layer through the diffusion layer upon melting the agent.

18. The temperature indicating display device as claimed in claim 17, wherein the temperature indicating device as claimed in claims 14 or 15 and the information display member having the information recording film layer are totally covered with a transparent protective sheet.

19. A temperature detecting agent being capable of forming the temperature detecting agent layer comprising a substance of which the state shifts dependently on temperature in the temperature indicating display device as claimed in claims 1 to 18.

20. The temperature detecting agent as claimed in claim 19, wherein the temperature detecting agent is at least one kind of a heat melting agent selected from the group consisting of paraffin, a higher fatty acid, a higher fatty acid ester and a higher alcohol.

21. A container comprising the temperature indicating display device as claimed in one of claims 1 to 13 and claims 17 to 18.

22. The container as claimed in claim 21, wherein the container is a food container.

23. The container as claimed in claim 21, wherein the container is a packing container.

24. The container as claimed in claim 21, wherein the container is a transporting container.

25. A temperature indicating display label comprising a substrate, a separator containing a temperature detecting agent layer containing a substance of which the state shifts dependently on temperature, and an information record holding layer containing an information recording layer having information recorded therein.

26. The label as claimed in claim 25, wherein the information record holding layer comprises a transparent material.

27. The label as claimed in claim 25 or 26, wherein the separator comprises a transparent material.

28. The label as claimed in claims 25 to 27, wherein the temperature detecting agent layer contained in the separator and the information recording film layer recorded in the information recording holding layer are adjacent to each other.

29. The label as claimed in one of claims 25 to 28, wherein the label further comprises a porous plate capable of forming a diffusion layer.

30. The label as claimed in one of claims 25 to 29, wherein the label further comprises an adhesive layer on a back surface of the substrate, whereby the label is capable of being adhered.

31. The label as claimed in one of claims 25 to 30, wherein the label further comprises a protective plate.

32. The label as claimed in one of claims 25 to 31, wherein information of the information recording film layer is printing.

33. A laminated body comprising layers comprising a temperature detecting agent layer containing a substance of which the state shifts dependently on temperature, an information recording film layer, and an information record holding layer.

34. The laminated body as claimed in claim 33, wherein the laminated body further comprises a diffusion layer between the information recording film layer and the temperature detecting agent layer.
